# EUROPEAN PATENT APPLICATION

(11) **EP 4 838 598 A1**
(43) Date of publication of application: **11.11.2026**
(21) Application number: 25761363.8
(22) Date of filing: 14.02.2025
(51) Int. Cl.: H01M 10/04, H01M 10/0587, H01M 50/103, H01M 50/133

(54) **RECTANGULAR SECONDARY BATTERY**

(30) Priority: 28.02.2024 JP 2024028257
(71) Applicant: Panasonic Intellectual Property Management Co., Ltd., Kadoma-shi, Osaka 571-0057 (JP)
(72) Inventor: MARUYAMA, Takamasa, Osaka 571-0057 (JP)
(74) Representative: Eisenführ Speiser
(86) International application number: PCT/JP2025/004878
(87) International publication number: WO 2025/182604

(57) **Abstract**

A battery (10) comprises: a flat electrode body (13) in which a positive electrode and a negative electrode are wound with a separator therebetween; and a flat outer can (14) which accommodates the electrode body (13), the flat outer can having a bottomed cylindrical-shape. A first protruding part (31) protrudes in the minor-axis direction of the electrode body (13) and extends in the winding axis direction of the electrode body (13). The first protruding part is provided at both ends, in the major-axis direction of the electrode body (13), of at least one inner surface (14b) of a pair of main surface parts (14a) that are part of the outer can (14) and that face each other in the minor-axis direction of the electrode body (13).

## Description

### TECHNICAL FIELD

The present disclosure relates to a rectangular secondary battery.

### BACKGROUND ART

Conventional rectangular secondary batteries include a rectangular secondary battery disclosed in PATENT LITERATURE 1. This rectangular secondary battery is a lithium ion secondary battery, and comprises a flat-shaped electrode assembly, and a bottomed, cylindrical and flat-shaped housing can that houses the flat-shaped electrode assembly. The flat-shaped electrode assembly is joined to the housing can via a positive electrode tab and is joined to a negative electrode terminal, which is stationary with respect to the housing can, via a negative electrode tab. This rectangular secondary battery is primarily intended to be mounted in a mobile electronic device such as a smartphone, a laptop computer, or an MP3 player.

### CITATION LIST

### PATENT LITERATURE

PATENT LITERATURE 1: Japanese Translation of PCT International Application Publication No. 2016-531403

### SUMMARY

In the above-described rectangular secondary battery, the electrode assembly is joined to the housing can and the negative electrode terminal via positive electrode tab and negative electrode tab, which are easily deformed. Accordingly, when a mobile electronic device or the like in which the rectangular secondary battery is mounted is accidentally dropped, the flat-shaped electrode assembly tends to move in the housing can with an impact associated with the drop to be subjected to a force from the housing can and get damaged. Against such a background, the present inventors have found that, when a center portion of a main surface of the electrode assembly is pressed by an inner surface of the housing can to prevent the flat-shaped electrode assembly from moving in the housing can, a thickness of the rectangular secondary battery in a short diameter direction of the electrode assembly greatly increases with the expansion of the flat-shaped electrode assembly after charging and discharging cycles. It is an advantage of the present disclosure to provide a rectangular battery that may reduce damage to a flat-shaped electrode assembly when being subjected to an impact and may also reduce an increase in thickness in a short diameter direction of the electrode assembly after cycles.

In order to solve the above-described problem, a rectangular secondary battery according to the present disclosure comprises a flat-shaped electrode assembly in which an elongated positive electrode and an elongated negative electrode are wound via a separator interposed between the positive electrode and the negative electrode, and a bottomed, cylindrical and flat-shaped housing can that houses the electrode assembly, in which, when portions of the housing can that face each other in a short diameter direction of the electrode assembly are defined as a pair of main surface portions, a first protruding portion that protrudes in the short diameter direction of the electrode assembly and extends in a winding axis direction of the electrode assembly is provided at both end portions of an inner surface of at least one of the pair of main surface portions in a long diameter direction of the electrode assembly.

The rectangular secondary battery according to the present disclosure may reduce damage to the flat-shaped electrode assembly when being subjected to an impact and may also reduce an increase in thickness of the battery after charging and discharging cycles.

### BRIEF DESCRIPTION OF DRAWING

FIG. 1 is a sectional view of a rectangular secondary battery of a first embodiment taken along a plane including a winding axis direction and a center in a long diameter direction.
FIG. 2 is a top view of a sealing plate as viewed from above in the winding axis direction.
FIG. 3 is a top view of a spacer as viewed from above in the winding axis direction.
FIG. 4 is a sectional view taken along a line A-A in FIG. 1.
FIG. 5 is a diagram explaining a structure of a housing can.
FIG. 6 is a diagram explaining a structure of a first protruding portion in a housing can of a rectangular secondary battery of a modification.
FIG. 7 is a diagram explaining a structure of a housing can of a rectangular secondary battery of a second embodiment.
FIG. 8 is a diagram explaining a structure of a housing can of a rectangular secondary battery of Comparative Example 1.
FIG. 9 is a diagram explaining a structure of a housing can of a rectangular secondary battery of Comparative Example 2.

### DESCRIPTION OF EMBODIMENTS

An embodiment of a rectangular secondary battery according to the present disclosure will be described in detail below with reference to the drawings. The rectangular secondary battery of the present disclosure may be a battery using an aqueous electrolyte, or may be a battery using a non-aqueous electrolyte. In the following, a non-aqueous electrolyte secondary battery (lithium ion battery) using a non-aqueous electrolyte will be exemplified as a rectangular secondary battery 10 of one embodiment, but the rectangular secondary battery of the present disclosure is not limited to this.

It is contemplated from the beginning that a new embodiment is constructed by appropriately combining feature portions of embodiments and modifications described below. In the following embodiments, the same components are denoted by the same reference numerals in the drawings, and duplicate descriptions are omitted. Schematic diagrams are included in a plurality of the drawings, and the dimensional ratios such as lengths, widths and heights of members between different drawings are not necessarily the same.

In this specification, a sealing plate 17 side in a winding axis direction of a flat-shaped electrode assembly 13 of the rectangular secondary battery 10 is defined as "upper", and a bottom portion 29 side of a housing can 14 in the winding axis direction is defined as "lower". In the following description and in the drawings, an X direction refers to a long diameter direction of the flat-shaped electrode assembly 13, a Y direction refers to a short diameter direction of the flat-shaped electrode assembly 13, and a Z direction refers to a winding axis direction of the flat-shaped electrode assembly 13. The X direction, the Y direction, and the Z direction are orthogonal to each other. In the following description, the rectangular secondary battery is simply referred to as a battery.

Of the components described below, components that are not described in the independent claim indicating the highest level concept are optional components and are not essential components. In addition, the present disclosure is not limited to the following embodiments and modifications thereof, and various improvements and changes are possible within the matters described in the claims of the present application and the scope of equivalence of claims.

### (First Embodiment)

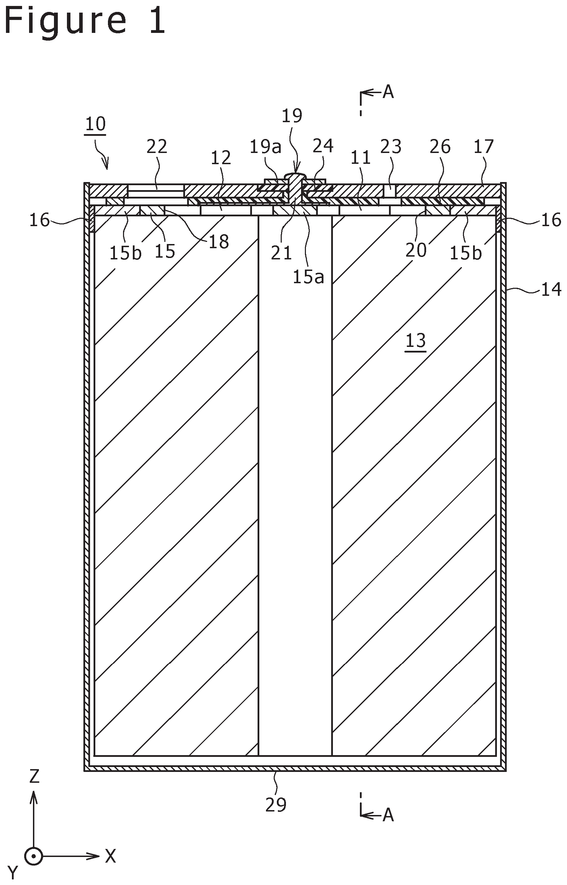

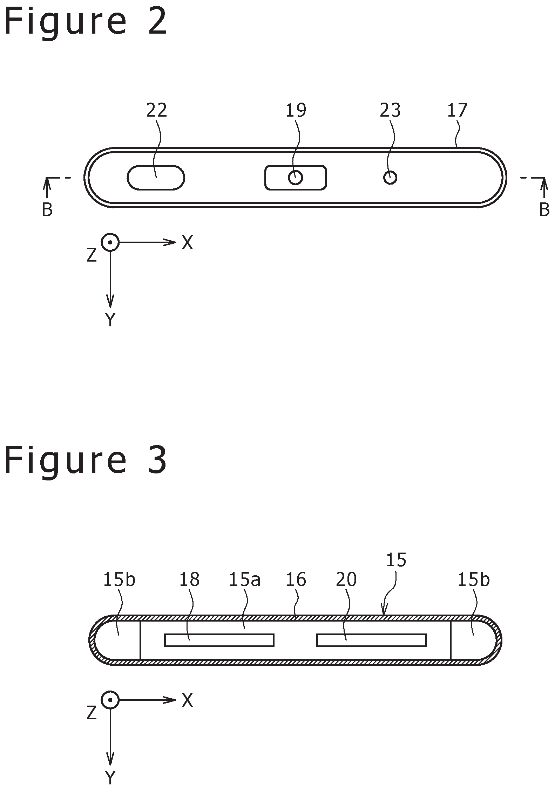

FIG. 1 is a sectional view of the battery 10 taken along a plane including the Z direction and the X direction and passing through a center in the Y direction. The Z direction corresponds to the winding axis direction of the flat-shaped electrode assembly 13. The X direction and the Y direction correspond to the long diameter direction and the short diameter direction of the flat-shaped electrode assembly 13, respectively. FIG. 2 is a top view of a sealing plate 17 as viewed from above in the Z direction, and FIG. 3 is a top view of a spacer 15 as viewed from above in the Z direction. As illustrated FIG. 1, the battery 10 comprises the flat-shaped electrode assembly (hereinafter, simply referred to as an electrode assembly) 13, a non-aqueous electrolyte (not illustrated), the bottomed, cylindrical and flat-shaped housing can 14 that houses the electrode assembly 13 and the non-aqueous electrolyte, the sealing plate 17 that seals an opening portion of the housing can 14, an insulating plate 26 that contacts a lower surface of the sealing plate 17, and the plate-shaped spacer 15 that is disposed above the electrode assembly 13 and is made of an insulating material.

The electrode assembly 13 is formed in a flat shape by being pressed in the Y direction after an elongated positive electrode and an elongated negative electrode are wound via two elongated separators each interposed between the positive electrode and the negative electrode. The positive electrode is disposed at an outermost periphery of the electrode assembly 13. The sealing plate 17 is fitted into the opening portion of the housing can 14. A fitted portion of the housing can 14 and the sealing plate 17 is welded, for example, by laser welding, so that the inside of the battery 10 is sealed.

The non-aqueous electrolyte has ion conductivity (for example, lithium ion conductivity). The non-aqueous electrolyte consists of a liquid electrolyte (electrolytic solution). The liquid electrolyte (electrolytic solution) includes a non-aqueous solvent, and an electrolyte salt dissolved in the non-aqueous solvent. For the non-aqueous solvent, for example, esters, ethers, nitriles, amides, mixed solvents containing two or more selected from the foregoing, and the like may be used. Examples of the non-aqueous solvent include ethylene carbonate (EC), ethyl methyl carbonate (EMC), dimethyl carbonate (DMC), diethyl carbonate (DEC), and mixed solvents containing any of them. The non-aqueous solvent may contain a halogen-substituted product (for example, fluoroethylene carbonate) obtained by substituting at least some of hydrogen atoms in these solvents with a halogen atom such as fluorine. For the electrolyte salt, a lithium salt such as LiPF₆ is used.

The positive electrode has a positive electrode core, and a positive electrode mixture layer formed on each surface of the positive electrode core. For the positive electrode core, a foil of metal such as aluminum or an aluminum alloy, which is stable within a potential range of the positive electrode, a film in which such a metal is disposed on a surface layer thereof, or the like can be used. The positive electrode mixture layer includes a positive electrode active material, a conductive agent, and a binder. The positive electrode can be produced by, for example, applying a positive electrode mixture slurry including a positive electrode active material, a conductive agent, a binder, and the like on a positive electrode core, drying the resulting coating film, and then compressing the coating film to form a positive electrode mixture layer on each surface of the positive electrode core.

The positive electrode active material is composed of a lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, W, and the like. An example of a preferable lithium-containing metal composite oxide is a composite oxide containing at least one of the group consisting of Ni, Co, Mn and Al.

Examples of the conductive agent included in the positive electrode mixture layer may include carbon black such as acetylene black and Ketjenblack, and carbon materials such as graphite. Examples of the binder included in the positive electrode mixture layer may include fluororesins such as polytetrafluoroethylene (PTFE) and polyvinylidene fluoride (PVdF), polyacrylonitrile (PAN), polyimide resins, acrylic resins, polyolefin resins, and the like. These resins may be used in combination with cellulose derivatives such as carboxymethyl cellulose (CMC) or a salt thereof, a polyethylene oxide (PEO), or the like.

The negative electrode has a negative electrode core, and a negative electrode mixture layer formed on each surface of the negative electrode core. For the negative electrode core, a foil of metal such as copper or a copper alloy, which is stable within a potential range of the negative electrode, a film in which such a metal is disposed on a surface layer thereof, or the like can be used. The negative electrode mixture layer includes a negative electrode active material, and a binder. The negative electrode can be produced by, for example, applying a negative electrode mixture slurry including a negative electrode active material, a binder, and the like on a negative electrode core, drying the resulting coating film, and then compressing the coating film to form a negative electrode mixture layer on each surface of the negative electrode core.

As the negative electrode active material, a carbon material that reversibly occludes and releases lithium ions is generally used. A preferable carbon material is graphite including natural graphite such as flaky graphite, massive graphite, and earthy graphite, and artificial graphite such as massive artificial graphite and graphitized mesophase carbon microbeads. The negative electrode mixture layer may include a silicon (Si) material containing Si as the negative electrode active material. For the negative electrode active material, a metal alloyed with lithium other than Si, an alloy containing such a metal, a compound containing such a metal, or the like may be used.

For the binder included in the negative electrode mixture layer, fluororesins, PAN, polyimide resins, acrylic resins, polyolefin resins, or the like may be used as in the case of the positive electrode, and a styrene-butadiene rubber (SBR) or a modification thereof is preferably used. In the negative electrode mixture layer, for example, in addition to SBR and the like, CMC or a salt thereof, polyacrylic acid (PAA) or a salt thereof, polyvinyl alcohol, or the like may be included.

A porous sheet having ion permeability and an insulation property is used for the separator. Specific examples of the porous sheet include a microporous thin film, a woven fabric, and a nonwoven fabric. The material of the separator is preferably a polyolefin resin such as polyethylene or polypropylene, a cellulose, or the like. The separator may be either a single layer structure or a laminated structure. A heat-resistant layer or the like may be formed on a surface of the separator.

As illustrated in FIG. 1, a positive electrode tab 11 and a negative electrode tab 12 extend upward in the Z direction from the electrode assembly 13. The spacer 15 has two slit-shaped openings 18 and 20 (see FIG. 3) located at an interval in the X direction. The negative electrode tab 12 passes through the opening 18, and is joined to a lower surface of a metallic rivet 21 that passes through the insulating plate 26. The rivet 21 is joined and electrically connected to an inner peripheral surface of an annular negative electrode terminal plate 19a. The negative electrode terminal plate 19a and the rivet 21 constitute a negative electrode terminal 19.

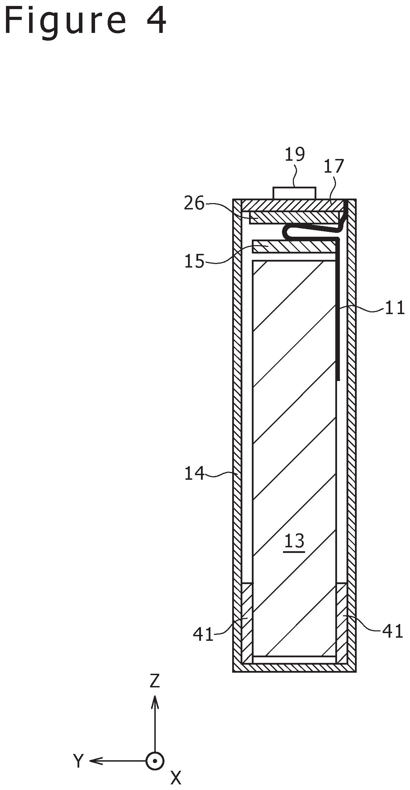

FIG. 4 is a sectional view taken along a line A-A in FIG. 1. As illustrated in FIG. 4, the positive electrode tab 11 passes through a gap between the spacer 15 and the housing can 14. The positive electrode tab 11 has a bending portion between the spacer 15 and the insulating plate 26. An end portion of the positive electrode tab 11 is sandwiched between the housing can 14 and the sealing plate 17, and is integrally welded to the housing can 14 and the sealing plate 17. The sealing plate 17 and the housing can 14 electrically joined to the positive electrode constitute a positive electrode terminal.

As illustrated in FIG. 2, a safety vent 22 and a non-aqueous electrolytic solution injection hole 23 are provided in the sealing plate 17. The non-aqueous electrolytic solution injection hole 23 is sealed with a sealing material (not illustrated). As illustrated in FIG. 1, the negative electrode terminal plate 19a and an annular gasket 24 having an insulation property are mounted on the sealing plate 17. The gasket 24 is made of an insulating material such as polyolefin. The gasket 24 insulates the negative electrode terminal 19 from the sealing plate 17 and seals between them. The rivet 21 is inserted into the sealing plate 17 from below via the insulating plate 26. Then, the rivet 21, the insulating plate 26, the sealing plate 17, the gasket 24, and the negative electrode terminal plate 19a are integrated by crimping a tip end portion of the rivet 21. A recess is formed in the insulating plate 26 on the lower side thereof, and a lower end portion of the rivet 21 is housed in the recess. As a result, the rivet 21 is configured not to protrude toward the electrode assembly 13.

As illustrated in FIG. 3, the spacer 15 has a main body portion 15a occupying a center portion and end portions 15b provided at both ends in the X direction. The main body portion 15a is made of an insulating material such as polypropylene. Meanwhile, the end portions 15b are made of an insulating material having impact absorbency, such as styrene butadiene. The main body portion 15a and the end portions 15b are arranged in close contact with each other. An insulating tape 16 is stuck to the main body portion 15a and the end portions 15b so as to surround the peripheries of the main body portion 15a and the end portions 15b over the entire periphery. Thus, the main body portion 15a and the end portions 15b are integrated. Each of a positive electrode-side current collecting structure and a negative electrode-side current collecting structure may be any current collecting structure that is adopted in a rectangular battery, and is not limited to a current collector structure described with reference to FIGS. 1 to 4.

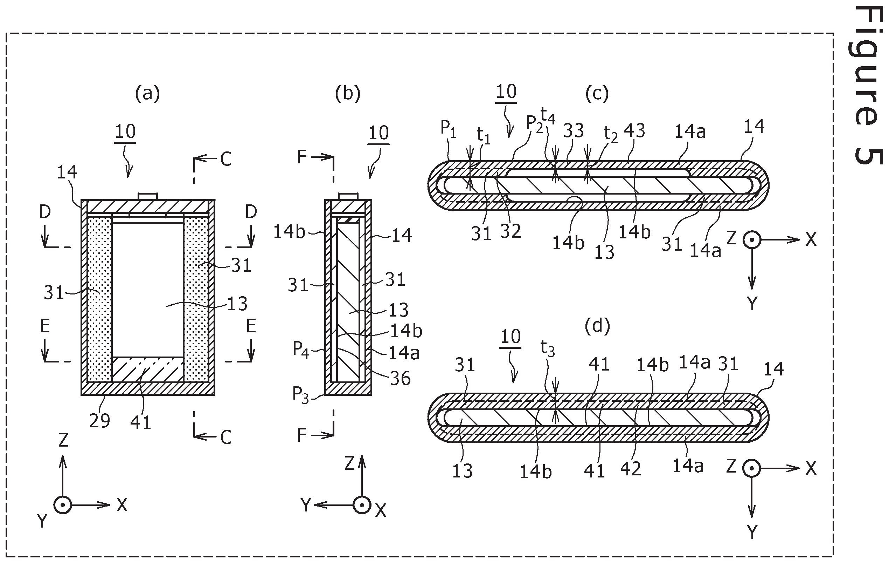

FIG. 5 is a diagram for explaining a structure of the housing can 14. More specifically, FIG. 5(a) is a sectional view of the battery 10 taken along a plane including the Z direction and the X direction and passing through one side end portion in the Y direction, and FIG. 5(b) is a sectional view taken along a line C-C in FIG. 5(a). FIG. 5(c) is a sectional view taken along a line D-D in FIG. 5(a), and FIG. 5(d) is a sectional view taken along a line E-E in FIG. 5(a). In FIGS. 5(a) and 5(b), a cross section indicated by dots is a partial region of the housing can 14 and a sectional region for first protruding portions 31. In FIG. 5(a), a cross section indicated by dashed-line hatching is another partial region of the housing can 14 and a sectional region of a second protruding portion 41. FIG. 5 illustrates a state in which the battery 10 is charged to 30% of the capacity first after being produced. In FIG. 5, the sealing plate 17 and the insulating plate 26 are illustrated as one integrated member. A sectional view taken along a line F-F in FIG. 5(b) corresponds to FIG. 5(a).

As illustrated in FIGS. 5(a) to 5(d), in the present disclosure, portions of the housing can 14 that face each other outward in the Y direction are defined as a pair of main surface portions 14a. In each of a pair of inner surfaces 14b of the pair of main surface portions 14a, first protruding portions 31 that protrude in the Y direction and extend in the Z direction are provided at both end portions in the X direction. An end portion on one side of the electrode assembly 13 in the X direction is sandwiched between the pair of first protruding portions 31 in the Y direction, and an end portion on the other side of the electrode assembly 13 in the X direction is also sandwiched between another pair of first protruding portions 31 in the Y direction.

As illustrated in FIGS. 5(a) and 5(d), in each of the pair of inner surfaces 14b, a second protruding portion 41 extending in the X direction is provided in an end portion thereof on the bottom portion 29 side in the Z direction. A center portion in the X direction at the lower end portion of the electrode assembly 13 in the Z direction is sandwiched between a pair of second protruding portions 41. At the end portions on the bottom portion 29 side of the pair of inner surfaces 14b in the Z direction, the first protruding portions 31 and the second protruding portions 41 are connected.

Next, advantageous effects of the battery 10 of the present disclosure will be described. In the related art, when a mobile electronic device or the like in which the rectangular secondary battery is mounted is accidentally dropped, the flat-shaped electrode assembly tends to move in the housing can with an impact associated with the drop, to be subjected to a force from the housing can and get damaged. In other words, when the electrode assembly is sandwiched by the inner surfaces of the housing can in the Y direction, it is possible to reduce the movement of the electrode assembly and reduce the damage to the electrode assembly.

However, as will be described in detail later, the present inventors have experimentally found that the center portion of the flat-shaped electrode assembly in the Y direction and the Z direction greatly expands due to charging and discharging. Therefore, when the center portion of the electrode assembly in the Y direction and the Z direction is sandwiched between the inner surfaces of the housing can in the Y direction in order to reduce the movement of the electrode assembly, the thickness of the rectangular secondary battery in the Y direction greatly increases along with the expansion of the electrode assembly after charging and discharging cycles.

Against such a background, with the battery 10 of the first embodiment, both end portions of the electrode assembly 13 in the Y direction and the lower end portion of the electrode assembly 13 in the Z direction are sandwiched between the inner surfaces 14b of the housing can 14. Accordingly, it is possible to reduce the movement of the electrode assembly 13 and reduce the damage to the electrode assembly 13. Furthermore, the first protruding portions 31 and the second protruding portions 41 are provided at both end portions of the electrode assembly 13 in the Y direction, in which the amount of expansion is relatively small, and at positions facing the lower end portion of the electrode assembly 13 in the Z direction, so that it is possible to reduce the expansion of the battery 10 in the Y direction after charging and discharging cycles.

As illustrated in FIG. 5(c), a thickness t1 of the housing can 14 in the Y direction at a first location 32 where the first protruding portion 31 is provided on the inner surface 14b is larger than a thickness t2 of the housing can 14 in the Y direction at a second location 33 located at an interval from the first protruding portion 31 in the X direction in the main surface portion 14a. Accordingly, the rigidity of the housing can 14 at the first location 32 is increased, so that the electrode assembly 13 can be firmly sandwiched between the pair of first protruding portions 31 in the Y direction.

As illustrated in FIGS. 5(c) and 5(d), a thickness t3 of the housing can 14 in the Y direction at a third location 42 where the second protruding portion 41 is provided in the main surface portion 14a is larger than a thickness t4 of the housing can 14 in the Y direction at a fourth location 43 located at an interval from the second protruding portion 41 in the Z direction in the main surface portion 14a. Accordingly, the rigidity of the housing can 14 at the third location 42 is increased, so that the electrode assembly 13 can be firmly sandwiched between the pair of second protruding portions 41 in the Y direction.

In order to effectively reduce the expansion of the battery 10 in the Y direction after charging and discharging cycles, the first protruding portion 31 is preferably located within a range from an end P1 (see FIG. 5(c)) in the X direction in the main surface portion 14a of the housing can 14 to a first position P2 (see FIG. 5(c)) located closer to the center portion side in the X direction by 20% of the X-directional length of the main surface portion 14a. In addition, in order to effectively reduce the movement of the electrode assembly 13, the X-directional length of the first protruding portion 31 is preferably a length greater than or equal to 5% of the X-directional length of the main surface portion 14a of the housing can 14.

In order to effectively reduce the expansion of the battery 10 in the Y direction after charging and discharging cycles, the second protruding portion 41 is preferably located within a range from a lower end P3 (see FIG. 5(b)) in the Y direction in the main surface portion 14a of the housing can 14 to a first position P4 (see FIG. 5(b)) located closer to the center portion side in the Z direction by 20% of the Z-directional length of the main surface 14b. In addition, in order to effectively reduce the movement of the electrode assembly 13, the Z-directional length of the second protruding portion 41 is preferably a length greater than or equal to 5% of the Z-directional length of the main surface portion 14a of the housing can 14.

In the battery 10, the first protruding portions 31 are provided at both end portions of the inner surface 14b in the X direction in each of the pair of main surface portions 14a facing in the Y direction. However, the first protruding portions 31 may be provided at both end portions in the X-direction on the inner surface of only one of the pair of main surface portions. The second protruding portion 41 extending in the X direction is provided in the lower end portion in the Z direction on the inner surface 14b of each of the pair of main surface portions 14a facing in the Y direction. However, the second protruding portion 41 extending in the X direction may be provided in the lower end portion in the Z direction on the inner surface of only one of the pair of main surface portions facing in the Y direction.

The thickness t1 in the Y direction is larger than the thickness t2 in the Y direction. However, the thickness of the housing can in the Y direction at the first location where the first protruding portion is provided in the main surface portion may be equal to the thickness of the housing can in the Y direction at the second location located at an interval from the first protruding portion in the X direction in the main surface portion, or may be smaller than the thickness of the housing can in the Y direction at the second location. In addition, the thickness t3 in the Y direction is larger than the thickness t4 in the Y direction. However, the thickness of the housing can in the Y direction at the third location where the second protruding portion is provided in the inner surface portion may be equal to the thickness of the housing can in the Y direction at the fourth location located at an interval from the second protruding portion in the Z direction in the inner surface portion, or may be smaller than the thickness of the housing can in the Y direction at the fourth location.

A case has been described where the first protruding portions 31 and the second protruding portions 41 are serially connected in the X direction, but the first protruding portions and the second protruding portion need not be connected. As illustrated in FIG. 5(c), the first protruding portions 31 extend in the Z direction from ends of the main surface portion 14a in the X direction. However, the first protruding portions may be provided at an interval from the ends of the main surface portion 14a in the X directions.

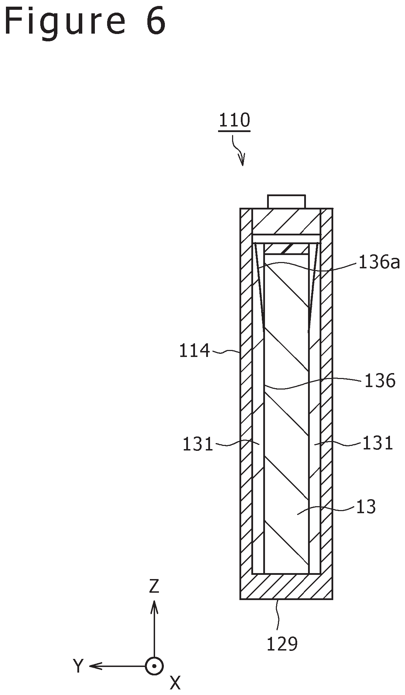

As illustrated in FIG. 5(b), an end surface 36 of the first protruding portion 31 in the Y direction is present at a substantially the same position in the Y direction. However, as illustrated in FIG. 6, that is, a sectional view corresponding to FIG. 5(b) in a battery 110 of a modification, an end surface 136 of a first protruding portion 131 in the Y direction may include an inclined surface portion 136a that is inclined such that an inner diameter of a housing can 114 increases in the Z direction from a bottom portion 129 side of the housing can 114 toward an end at an opening side of the housing can 114 in the Z direction. In this manner, the electrode assembly 13 can be smoothly inserted into the housing can 114.

### (Second Embodiment)

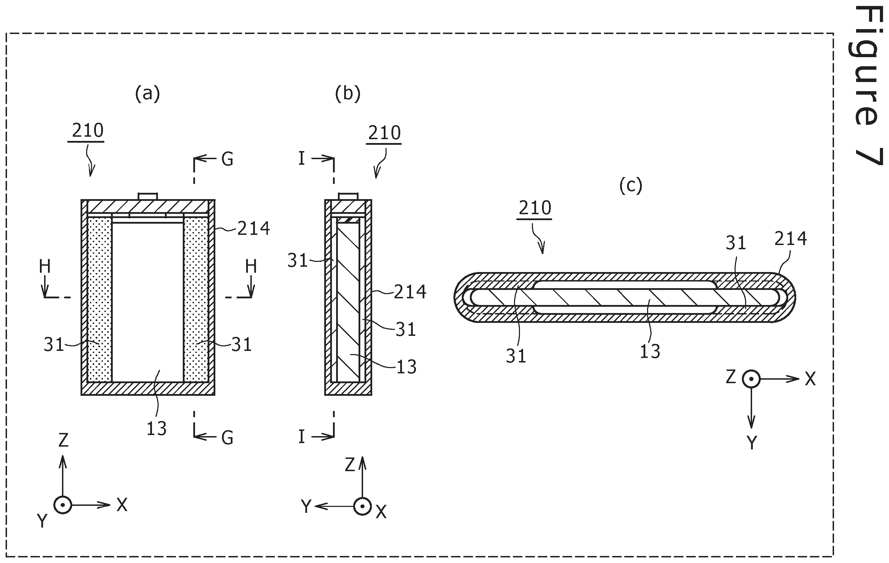

FIG. 7 is a diagram for explaining a structure of a housing can 214. More specifically, FIG. 7(a) is a sectional view of a battery 210 taken along a plane including the Z direction and the X direction and passing through one side end portion in the Y direction, and FIG. 7(b) is a sectional view taken along a line G-G in FIG. 7(a). FIG. 7(c) is a sectional view taken along a line H-H in FIG. 7(a). In FIG. 7(a), a cross section indicated by dots is a partial region of the housing can 214 and a sectional region for first protruding portions 31. FIG. 7 illustrates a state in which the battery 210 is charged to 30% of the capacity first after being produced. Also in FIG. 7, a sealing plate 17 and an insulating plate 26 are illustrated as one integrated member. A sectional view taken along a line I-I in FIG. 7(b) corresponds to FIG. 7(a). In the battery 210, the housing can 214 has first protruding portions 31, but has no second protruding portion 41 (see FIG. 5). Also with such a battery 210, it is possible to reduce the damage to an electrode assembly 13 when being subjected to an impact and reduce an increase in thickness of the battery 210 in the Y direction after charging and discharging cycles.

### <Example 1>

The housing can 14 in the battery 10 of the first embodiment was produced by drawing an aluminum plate so that a thickness in the Y direction was partially increased. The thickness of the thick portion (t1 and t3 described above) was set to 0.45 mm, and the thickness of the thin portion (t2 and t4 described above) was set to 0.32 mm. The thick portion corresponds to the first location 32 and the third location 42 in the housing can 14. The positive electrode and the negative electrode were wound via a separator interposed therebetween, and were pressed in the Y direction, and a winding finish end was fixed with polypropylene tape, thereby producing a flat-shaped electrode assembly 13. The thickness of the electrode assembly 13 in the Y direction was set to 3.6 mm. The produced electrode assembly 13 was housed in the housing can 14, the liquid was injected into the housing can 14, and the housing can 14 was sealed, thereby producing the battery 10 of the first embodiment.

A tension ratio ([thickness of the electrode assembly 13 in the Y direction] / [distance between the pair of inner surfaces 14b]) of the electrode assembly 13 immediately after the production was 87% at the thin portion and 92% at the thick portion. The tension ratio after the electrode assembly 13 was charged by 30% of the capacity immediately after the production was 94% at the thin portion and 101% at the thick portion. The tension ratio of the thick portion of 101% was calculated by simulating the thickness of the electrode assembly 13 in the Y direction after the expansion associated with the charging on the assumption that the electrode assembly was not subjected to a force from the pair of inner surfaces 14b and dividing the calculated thickness in the Y direction by the distance between the pair of inner surfaces 14b.

### <Example 2>

The battery 210 of the second embodiment was produced in the same method as the method described for the battery 10 of Example 1. In the battery 210 of Example 2, various dimensions corresponding to those of the battery 10 of Example 1, such as the thicknesses of the thick portion and the thin portion, were the same as the battery 10 of Example 1.

### <Comparative Example 1>

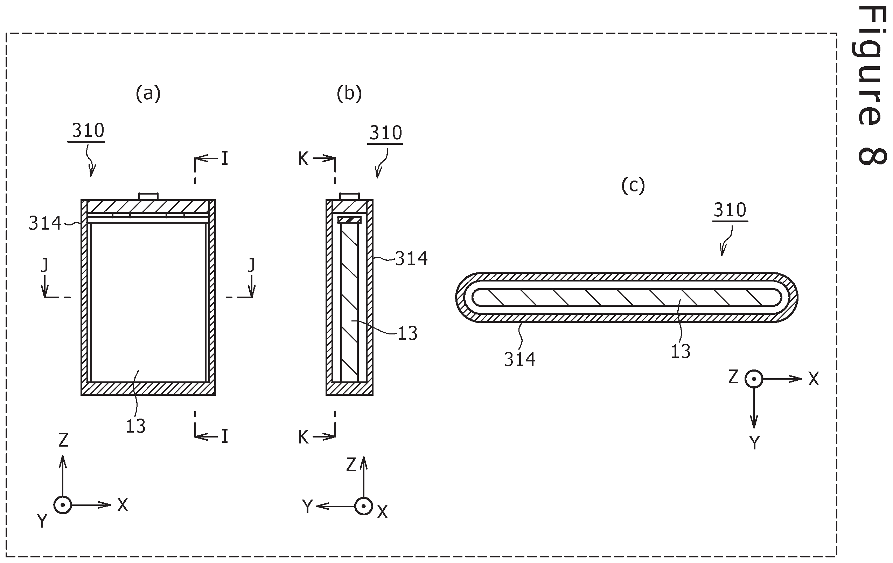

FIG. 8 is a diagram for explaining a structure of a housing can 314 of Comparative Example 1. More specifically, FIG. 8(a) is a sectional view of a battery 310 of Comparative Example 1 taken along a plane including the Z direction and the X direction and passing through one side end portion in the Y direction, and FIG. 8(b) is a sectional view taken along a line I-I in FIG. 8(a). FIG. 8(c) is a sectional view taken along a line J-J in FIG. 8(a). A sectional view taken along a line K-K in FIG. 8(b) corresponds to FIG. 8(a).

The battery 310 of Comparative Example 1 is the same as the battery 10 of Example 1 except that the first protruding portions 31 and the second protruding portions 41 do not exist.

### <Comparative Example 2>

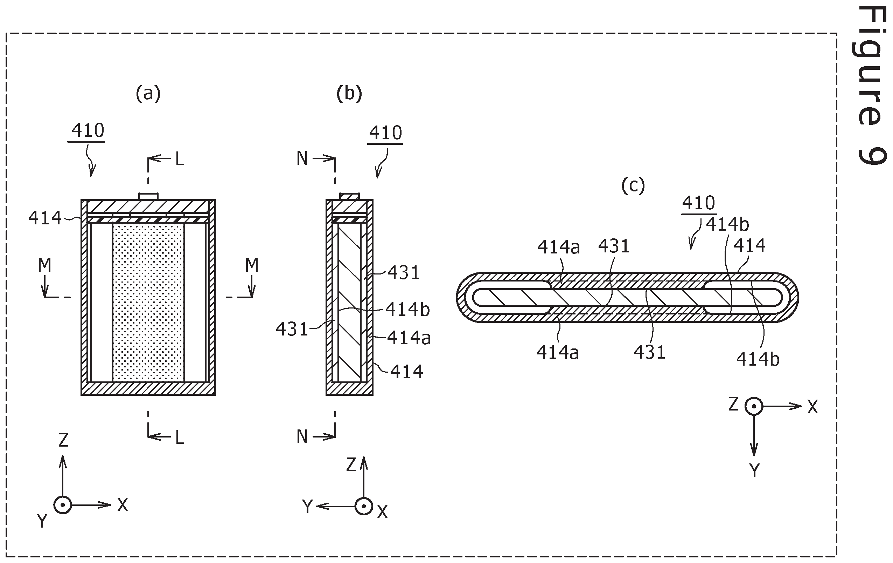

FIG. 9 is a diagram for explaining a structure of a housing can 414 of Comparative Example 2. More specifically, FIG. 9(a) is a sectional view of a battery 410 of Comparative Example 2 taken along a plane including the Z direction and the X direction and passing through one side end portion in the Y direction, and FIG. 9(b) is a sectional view taken along a line L-L in FIG. 9(a). FIG. 9(c) is a sectional view taken along a line M-M in FIG. 9(a). A sectional view taken along a line N-N in FIG. 9(b) corresponds to FIG. 9(a). In FIG. 9(a), a sectional region indicated by dots is a sectional region for protruding portions 431 described below.

In the battery 410 of Comparative Example 2, the protruding portions 431 protruding inward in the Y direction from an upper end portion in the Z direction to a lower end portion in the Z direction were provided at the center portions of a pair of inner surface 414b (see FIG. 9(c)) of a pair of main surface portions 414a in the X direction, the main surface portions 414a facing each other in the Y direction in the housing can 414. The location where the protruding portion 431 was provided in the housing can 414 was a thick portion where the thickness in the Y direction was larger. For the battery 410 of Comparative Example 2, various dimensions corresponding to those of the battery 10 of Example 1, such as the thicknesses of the thick portion and the thin portion, were the same as the battery 10 of Example 1.

### (Drop Test)

Five batteries were prepared for each of Examples 1 and 2 and Comparative Examples 1 and 2, and each battery was charged to 30% of the capacity. Each battery was dropped from a height of 1.5 m. The drop test was performed repeatedly 15 times while monitoring the voltage of each battery. A short circuit was determined to have occurred when a voltage drop greater than or equal to a predetermined voltage occurred.

### (Cycle Test)

Three batteries were prepared for each of Examples 1 and 2 and Comparative Examples 1 and 2. Before the cycle test, an average value of maximum thicknesses of the batteries in the Y direction was the same for each of Examples 1 and 2 and Comparative Examples 1 and 2. After each battery was charged until the voltage reached 4.2 V at a constant current of 0.5 C under a room-temperature environment, the battery was charged until the current reached 0.02 C at a constant voltage of 4.2 V. Then, the battery was discharged until the voltage reached 2.75 V at the constant current of 1.0 C. This charging and discharging was defined as one cycle, and the charging and discharging was repeated 500 cycles. Subsequently, the maximum thickness of each battery in the Y direction was measured. The average value of the maximum thicknesses in the Y direction each of Examples and Comparative Examples was calculated.

**[Table 1]**

| | The number of occurrences of short circuit in Drop Test | Average value of maximum thicknesses in Y direction in cycle test [mm] |
|---|---|---|
| Example 1 | 0/5 | 5.38 |
| Example 2 | 0/5 | 5.41 |
| Comparative Example 1 | 1/5 | 5.37 |
| Comparative Example 2 | 0/5 | 5.68 |

Test results are shown in Table 1. As shown in Table 1, in the drop test, a short circuit was observed in one battery in Comparative Example 1 in which the protruding portion (thick portion) was not provided. On the other hand, no short circuit was observed in all the batteries of Examples 1 and 2 and Comparative Example 2 in which the protruding portions were provided. It was found that the damage to the electrode assembly could be reduced by providing the protruding portions.

In regard to the cycle test, the average value of the maximum thicknesses in the Y direction after the cycle test was maximized in Comparative Example 2 in which a pair of protruding portions were provided in a pair of inner surfaces to sandwich the center portion of the electrode assembly in the Y direction and the Z direction therebetween. On the other hand, the average value of the maximum thicknesses of the batteries in the Y direction after the cycle test in the batteries of Examples 1 and 2 in which the protruding portions were provided in the pair of inner surfaces to sandwich a portion other than the center portion of the electrode assembly in the Y direction and the Z direction therebetween was almost equal to the average value of the maximum thicknesses of the batteries in the Y direction after the cycle test in the batteries of Comparative Example 1 in which the protruding portion was not provided.

Accordingly, it was found that when a pair of protruding portions were provided in a pair of inner surfaces to sandwich the portion other than the center portion of the electrode assembly in the Y direction and the Z direction therebetween, it was possible to reduce the damage to the electrode assembly and also reduce an increase in thickness of the battery in the Y direction after charging and discharging cycles.

The rectangular secondary battery of the present disclosure may have the following configurations.

Configuration 1: A rectangular secondary battery, comprising: a flat-shaped electrode assembly in which an elongated positive electrode and an elongated negative electrode are wound via a separator interposed between the positive electrode and the negative electrode; and a bottomed, cylindrical and flat-shaped housing can that houses the electrode assembly, wherein, when portions of the housing can that face each other in a short diameter direction of the electrode assembly are defined as a pair of main surface portions, a first protruding portion that protrudes in the short diameter direction and extends in a winding axis direction of the electrode assembly is provided at both end portions of an inner surface of at least one of the pair of main surface portions in a long diameter direction of the electrode assembly.

Configuration 2: The rectangular secondary battery described in Configuration 1, wherein the first protruding portion is provided on an inner surface of each of the pair of main surface portions.

Configuration 3: The rectangular secondary battery described in Configuration 1 or 2, wherein a thickness of the housing can at a first location where the first protruding portion is provided in the main surface portion is larger than a thickness of the housing can at a second location located at an interval from the first protruding portion in the long diameter direction in the main surface portion.

Configuration 4: The rectangular secondary battery described in any one of Configurations 1 to 3, wherein a second protruding portion extending in the long diameter direction is provided in at least one end portion of the main surface portion on a bottom portion's side of the housing can.

Configuration 5: The rectangular secondary battery described in Configuration 4, wherein the second protruding portion is provided in each of the pair of main surface portions.

Configuration 6: The rectangular secondary battery described in Configuration 4 or 5, wherein a thickness of the housing can at a third location where the second protruding portion is provided in the main surface portion is larger than a thickness of the housing can at a fourth location located at an interval from the second protruding portion in the winding axis direction in the main surface portion.

Configuration 7: The rectangular secondary battery described in any one of Configurations 1 to 6, wherein an end surface of the first protruding portion in the short diameter direction includes an inclined surface portion that is inclined such that an inner diameter of the housing can increases from a bottom portion's side of the housing can toward an end at an opening side of the housing can in the winding axis direction.

Configuration 8: The rectangular secondary battery described in any one of Configurations 1 to 7, wherein the first protruding portion is located within a range of 20% of a length of the main surface portion in the long diameter direction from an end of the main surface portion in the long diameter direction.

Configuration 9: The rectangular secondary battery described in any one of Configurations 1 to 8, wherein a length of the first protruding portion in the long diameter direction is a length greater than or equal to 5% of a length of the main surface portion in the long diameter direction.

Configuration 10: The rectangular secondary battery described in any one of Configurations 4 to 6, wherein the second protruding portion is located within a range of 20% of a length of the main surface portion in the winding axis direction from an end of the main surface portion on the bottom portion's side.

Configuration 11: The rectangular secondary battery described in Configuration 4, 5, 6, or 10, wherein a length of the second protruding portion in the winding axis direction is a length greater than or equal to 5% of a length of the main surface portion in the winding axis direction.

### REFERENCE SIGNS LIST

10, 110, 210 Battery, 11 Positive electrode tab, 12 Negative electrode tab, 13 Electrode assembly, 14, 114, 214 Housing can, 14a Main surface portion, 14b Inner surface of main surface portion, 15 Spacer, 16 Insulating tape, 17 Sealing plate, 18, 20 Opening, 19 Negative electrode terminal, 19a Negative electrode terminal plate, 21 Rivet, 22 Safety vent, 23 Non-aqueous electrolytic solution injection hole, 24 Gasket, 26 Insulating plate, 29, 129 Bottom portion, 31, 131 First protruding portion, 36, 136 End surface of first protruding portion, 41 Second protruding portion, 136a Inclined surface portion

## Claims

1. A rectangular secondary battery, comprising:
a flat-shaped electrode assembly in which an elongated positive electrode and an elongated negative electrode are wound via a separator interposed between the positive electrode and the negative electrode; and
a bottomed, cylindrical and flat-shaped housing can that houses the electrode assembly, wherein
when portions of the housing can that face each other in a short diameter direction of the electrode assembly are defined as a pair of main surface portions, a first protruding portion that protrudes in the short diameter direction and extends in a winding axis direction of the electrode assembly is provided at both end portions of an inner surface of at least one of the pair of main surface portions in a long diameter direction of the electrode assembly.

2. The rectangular secondary battery according to claim 1, wherein the first protruding portion is provided on an inner surface of each of the pair of main surface portions.

3. The rectangular secondary battery according to claim 1 or 2, wherein a thickness of the housing can at a first location where the first protruding portion is provided in the main surface portion is larger than a thickness of the housing can at a second location located at an interval from the first protruding portion in the long diameter direction in the main surface portion.

4. The rectangular secondary battery according to claim 1 or 2, wherein a second protruding portion extending in the long diameter direction is provided in at least one end portion of the main surface portion on a bottom portion's side of the housing can.

5. The rectangular secondary battery according to claim 4, wherein the second protruding portion is provided in each of the pair of main surface portions.

6. The rectangular secondary battery according to claim 4, wherein a thickness of the housing can at a third location where the second protruding portion is provided in the main surface portion is larger than a thickness of the housing can at a fourth location located at an interval from the second protruding portion in the winding axis direction in the main surface portion.

7. The rectangular secondary battery according to claim 1 or 2, wherein an end surface of the first protruding portion in the short diameter direction includes an inclined surface portion that is inclined such that an inner diameter of the housing can increases from a bottom portion's side of the housing can toward an end at an opening side of the housing can in the winding axis direction.

8. The rectangular secondary battery according to claim 1 or 2, wherein the first protruding portion is located within a range of 20% of a length of the main surface portion in the long diameter direction from an end of the main surface portion in the long diameter direction.

9. The rectangular secondary battery according to claim 1 or 2, wherein a length of the first protruding portion in the long diameter direction is a length greater than or equal to 5% of a length of the main surface portion in the long diameter direction.

10. The rectangular secondary battery according to claim 4, wherein the second protruding portion is located within a range of 20% of a length of the main surface portion in the winding axis direction from an end of the main surface portion on the bottom portion's side.

11. The rectangular secondary battery according to claim 4, wherein a length of the second protruding portion in the winding axis direction is a length greater than or equal to 5% of a length of the main surface portion in the winding axis direction.
